# EUROPEAN PATENT SPECIFICATION

(11) **EP 1 934 747 B1**
(45) Date of publication and mention of the grant of the patent: **17.12.2008**
(21) Application number: 07818189.8
(22) Date of filing: 17.09.2007
(51) Int. Cl.: G06F 11/14

(54) **INTELLIGENT DECISION-MAKING-SYSTEM FOR ALLOWING EASY AND SECURE BACKUPS**
INTELLIGENTES ENTSCHEIDUNGSSYSTEM ZUR ERMÖGLICHUNG EINFACHER UND SICHERER BACKUP-SPEICHERUNGEN
SYSTEME DE PRISE DE DECISION INTELLIGENT PERMETTANT DES SAUVEGARDES FACILES ET SECURISEES

(30) Priority: 06.10.2006 US 828612 P; 29.08.2007 US 846998
(43) Date of publication of application: 25.06.2008
(73) Proprietor: NERO AG, 76307 Karlsbad (DE)
(72) Inventor: LESSER, Richard, 76227 Karlsruhe (DE); GOLD, Alexander Steffen, 76137 Karlsruhe (DE)
(74) Representative: Zinkler, Franz
(86) International application number: PCT/EP2007/008076
(87) International publication number: WO 2008/040444

(56) References cited:
- EP-A- 1 596 302
- US-A1- 2002 087 588

## Description

### Field of the invention

The present invention relates to the generation of backup strategies for a client having content to be backed up and, in particular, as to how appropriate backup storage locations can be associated with different security requirements in an efficient and convenient manner.

### Background of the invention and prior art

As the huge majority of PC users has collected various kinds of digital data, the need for techniques allowing to efficiently create a backup of personal and/or system data grows continuously. In the future, even more digital data will be produced and the total amount of digital data grows steadily. Those data may be erased, when a hard drive crashes, a PC fails or by another incident rendering the PC or the data storage device unusable as, for example, over-voltages caused by lightnings, water poured on the electronical devices and so on. An efficient way for protecting data against those various events leading to data loss is to make backups of valuable data. The value of different kinds of data cannot be easily assessed or generalized. However, personalized items like documents, audio and video files, pictures, e-mails and browser links might be rated more valuable than the program files of in-stalled applications or operating systems. The latter can be reinstalled in case of a disaster while the personalized items cannot and are, therefore, lost when they have not been backed-up before the occurrence of the disaster or the incident leading to data loss.

There are numerous backup-softwares in the market, which offer the capability of backing-up to various destinations providing a lot of features and settings to the user. For example, the user has a variety of possible backup storage locations offered, from which he has to make a selection. Furthermore, numerous different backup modes do exist as, for example, full-backup, incremental-backup, differential-backup, replication and so on. Furthermore, numerous additional options can normally be selected, such as whether encryption is required, whether the backup shall be protected by a password, whether compression shall be used and so on. Furthermore, several backup programs offer expert features for handling files and folders in various ways, and does furthermore normally even allow to treat them differently with respect to the individual restore and backup settings.

Another point is that, in present implementations, the destination for the backup has to be selected by a user. Therefore, the decision, whether a place is safe such that the data can rest until a restore is required is up to the user. For a regular user, the decision where it would be best to store the backup files is all but trivial. In terms of data security and protection against various failures of PC components, it might be hard to judge, which storage location is appropriate even for a professional user.

Of course, a safe destination for a backup depends on the individual configuration and possibility of each user's PC system. The user has to know at least some basic imperatives regarding data security to be able to judge and to determine the safe location dependent on his very specific configuration of his PC or client.

For example, a user might have one physical hard drive with two logical partitions. From an inexperienced point of view, one sees two drives on his desktop, e.g. using the Windows Explorer. Without any background knowledge of the actual physical device, a user might be misled to think that a backup from one hard drive to another hard drive is safe, and would therefore decide to backup from one partition to the other. This would, of course, not prevent the data loss in case the drive crashes. The very experienced user, however, would not make such a decision, since he would know that if the hard drive crashes, most likely both logical drives will lose data.

When thinking about higher security demands, it becomes even more important to look for the safest place to store a backup file. In that case, normally, data has to be backed-up to different independent locations, such as to additionally account for the disruptions of one back up storage, for example, by acts of nature beyond control. As the above considerations have shown, the creation of a backup strategy is far from trivial. The higher the security demands, the more professional a user has to be to make the right decisions.

The normal user, instead, just wants the data to be safe in case of a disaster and has no interest or capability to become knowledgeable about the various settings and searching for the best way to safely backup precious holiday photos, self-made family videos or carefully written and collected documents.

Summarizing, the multitude of possibilities when deciding for a backup strategy can be annoying for inexperienced users (and even for experienced ones) and might often result in frustration, as the user lacks the knowledge in this particular field of application. Most regular users have no background knowledge on the techniques and possibilities of modern backup applications at all, making it nearly impossible for the user to create and maintain a secure backup strategy.

In the European Patent Application 1 596 302, it is proposed to select a back-up storage device to be used for back-up of a client's computer data on the basis of a plurality of predetermined parameters describing properties of a back-up location by weighting each desired parameter according to a pre-determined rule set and selecting the storage device associated with the highest total weighted sum for said parameters.

The US-application 2002/0087588 A1 proposes to simultaneously back up data to two independent backup devices, such as to increase the security of the backup. It is proposed to choose one backup location in the internet and another one which is locally available. However, the user has to manually select the two or more data storage locations used.

### Summary of the invention

Therefore the need exists to provide ways to generate a backup strategy for a client in an efficient and convenient manner, at the same time allowing for a highly secure backup without the requirement for the user to become familiar with the underlying technologies. The aforementioned need is addressed by the invention as defined in the appended independant claims.
According to a first embodiment of the present invention, a method for generating a backup strategy is provided, in which an environment of the client is automatically scanned to identify backup storage locations. Based on the knowledge of the backup storage locations, a security level parameter is associated with one or more of the backup store locations for a backup strategy with a security level indicated by the associated security level parameter. That is, a security level can be defined, and appropriate backup storage locations are automatically selected to satisfy the security requirement indicated by the security level parameter.

According to a further embodiment of the present invention, a distance estimation indicating a physical distance between the client and each backup storage location is additionally derived while scanning the environment of the client. That is, higher security demands indicated by the security level parameter can be satisfied by choosing at least one backup storage location, which is distant from the client, e.g. situated in a different storage of this client (different harddrive, etc.), a different physical machine or client, or even outside the local area network to which the client is connected.

According to a further embodiment of the present invention, a frequency of backups is influenced by the security level parameter such that the frequency level rises when a higher security level is demanded. In one further embodiment of the present invention, the content is immediately backed-up, once it changes.

In a further embodiment of the present invention, the security level is additionally associated with an encryption strength required. For high security demands, the encryption algorithms may, for example, be changed such that safer algorithms are chosen, when a higher security level is demanded.

According to a further embodiment of the present invention, specific file types and/or folders on the client can be manually chosen to be backed-up. According to a further embodiment of the present invention, the security level parameter is additionally associated to different file types and/or storage locations of content to be backed up, such that a greater amount of more personalized data is backed up, when the security level is raised.

According to a further embodiment of the present invention, the security level parameter is associated to a history strategy, which indicates a number of recent versions of files to be kept accessible. That is, when the security level parameter indicates a higher security level, a number of recent versions of files, which is maintained accessible, is raised.

According to a further embodiment of the present invention, a backup-software implements the method for generating the backup strategy to automatically scan for backup or storage locations and to provide an appropriate number of selected backup storage locations in dependency on a security level parameter, which can be input by a user. In an alternative embodiment, the security level parameter may already be preselected or stored within the software or the algorithm of the method.

According to a further embodiment of the present invention, the intrinsic data security properties of the detected backup storage locations is also taken into account. The intrinsic data security is the security or reliability of the individual backup storage location, i.e. the reliability and durability, which can be attributed to the individual backup storage location or medium. For example, raid-arrays operated in the mirroring-mode (raid level 1) are more secure, i.e. have a higher intrinsic data security than a single hard disc, as the raid-array, which physically appears to be one single hard disc, stores the information redundantly. To the contrary, a rate-array operated in raid 0 mode is less reliable than an individual hard disc, such that a rate 0 array has a lower intrinsic data security than a single hard drive. The intrinsic data security is also associated to the physical mechanism used to store data. For example, a optical medium, such as a CD or a DVD, which is only writable once, has a comparatively high intrinsic data security. That is due to the cause that such data can only be erased by destroying the media, whereas erasable data carriers may erroneously be erased during normal operation.

According to a further embodiment of the present invention, a cost parameter or a cost constraint is additionally taken into account, which offers the possibility to define an upper cost limit for a backup strategy. According to this embodiment, several association options between the security level parameter and the backup storage locations are feasible. On the one hand, one may seek to achieve the highest security given the cost constraint, that is maximum security is chosen, unless a cost limit is not exceeded. On the other hand, a trade off between cost and security may be found, such that a high level of security can be achieved at a moderate cost level.

Generally, depending on a single user input, a complete backup strategy may be provided, as far as it concerns the backup storage location to be selected. In further embodiments, additional user input can be provided, such as the previously discussed cost parameter, wherein the meaning of the parameter is obvious to the user, such that a user still gets a reliable backup strategy without having to be a professional in the business.

### Brief description of the drawings

Preferred embodiments of the present invention are subsequently described by referring to the enclosed drawings, where:
Fig. 1 shows a block diagram of an embodiment of a method for generating a backup strategy;
Fig. 2 shows a schematic view of a client implementing the inventive method in a network-environment;
Fig. 3 shows a block diagram of an embodiment of a backup program; and
Fig. 4 shows an embodiment of an apparatus for generating a backup strategy for a client.

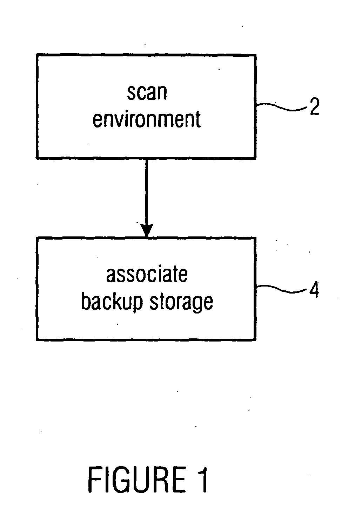

Fig. 1 shows an embodiment of a method for generating a backup strategy for a client, comprising a scanning step 2 and an association step 4. In the scanning step, an environment of the client is scanned to identify backup storage locations. Scanning the environment is performed using any communication means available to communicate with other devices, clients, PCs or electronic equipment capable of storing data. This can, for example, be performed via Ethernet, the Internet, WLAN, Bluetooth, USB, fire wire or any other radio-frequency communication means or communication means that does requires a physical connection. The backup storage location identified can be any means and apparatus, which are capable of storing data such as, for example; external hard discs, network attached storages (NAS), optical and magnetic recording media of different type such as, for example, DVD-R/W or tape storage media. Furthermore, the identified backup storage locations do not necessarily have to be permanently connected to the network or the client. As such, any removable media, which may be directly connected to the client or the network such as, for example, flash-memory in USB sticks, storage cards or the like, may be identified as backup storage locations. Furthermore, special commercial or non-commercial internet storage discs or internet storage space can be identified by automatic scanning of the environment. The client, for which the neighborhood is scanned, is not necessarily a PC, it may furthermore be any electronic device, on which content is stored, which has to be backed-up or which is worth a backup.

The backup storage locations can be identified using any available protocol such as, for example, SMB, HTTP, FTP, NFS, or any other standard or non-standard protocol capable of communicating with storage devices or storage locations. After the scanning step, numerous possible backup storage locations are known to the method, from which appropriate storage locations are finally chosen to be used for backup, depending on a security level parameter.

To this end, the security level parameter is associated with one or more backup storage locations according to a security association rule, indicating selected backup storage locations for a backup strategy with a security level indicated by the associated security level parameter. That is, according to the security demands, backup storage locations used in the backup procedure are automatically selected, i.e. the security level parameter is associated with one or more backup storage locations previously identified in scanning step 2.

According to the method detailed in Fig. 1, the user of a backup-program or the one seeking a backup strategy is not required to invest time in reading up what the backup-program means with its numerous features and which combination of the features to take or to activate to have a safe backup. Particularly, the user is not required to know where its valuable data is stored locally, nor to think about the strategy for making backups, nor is he stressed about making up his mind about the safest place to store a backup. This does not only simplify the use of an respective backup-software, but increases the safety of the backed-up files, as misjudgments of a user are avoided. Hence, the association of security levels to backup storage locations can be designed and planned by professionals in the business and the user simply has to indicate the desired security level for the backup. Misjudgments of the safety of the selected devices are avoided. The above mentioned decisions are taken by an application implementing embodiments of the invention in an automated way, following the new approach indicated above. Equipped with behavioral rules and embedded intelligence, the new type of backup application is able to judge the individual user's PC system (or other system) and determines the type of backup to use and finds a suitable and safe location for storing the backup or multiple simultaneous backups.

To increase the safety of the backup even further, further embodiments of the present invention associate the security level parameter to different available backup-options. In further embodiments of the invention, the security level parameter decides about a requirement of an encryption and on the security level of the encryption. That is, if a user demands a high security level, encryption is automatically enabled and the encryption algorithms used are chosen in dependency on the security level parameter.

This has the advantage that the user does not have to decide on possible security options or to choose between different encryption algorithms, since these decisions require a basic knowledge of the underlying mathematical algorithms, which is normally not known to the user and which is, furthermore, hard to learn.

According to a further embodiment of the present invention, the security level parameter is furthermore associated with a frequency of backups, that is the frequency of backups is chosen depending on the security level required. Normally, when the security level is raised, the frequency of backups will become higher. According to an alternative embodiment, the frequency of backups may be independently chosen by the user, as judging the influence of the frequency of the backup does not require any special knowledge. Particularly, a regular backup strategy may be created, initiating a backup at regularly spaced time intervals, chosen in dependency on the security level parameter. Furthermore, an instantaneous frequency mode may be implemented, which causes an immediate backup of content, once the content has changed. A further alternative selection is a combination of the above two frequency schedules, that is the content is backed-up immediately when it changes and, additionally, full-, differential-, or incremental-backups are initiated in a frequency indicated by the security level parameter.

According to a further embodiment, the file types and/or storage locations of a content to be backed-up are automatically selected in dependency on the security level parameter. This assures, without any additional knowledge of the user, that all personal files, e.g. stored in the "My Pictures" and "My Documents" folders are preserved, without the user knowing about the presence of those folders and that their digital camera pictures are normally automatically stored to those locations. This holds also true for other, less obvious files such as, for example, the links stored in a web-browser or the e-mails locally stored on disc (normally stored in specific file types or locations not necessarily known to the user). Implementing the inventive concept, those files can be backed-up and preserved, without the user knowing much about the folder-hierarchy of the operating system or software used.

According to a further embodiment of the present invention, a backup strategy for a backup-program is created, which allows to preserve more than one recent version of a file to be backed-up. That is, when the file is altered the previous as well as the actual version of the file is preserved. A higher security demand normally means that the number of recent file-versions is increased. That is, even if the file is accidentally altered and saved, one would have access to a previous version of the file.

According to a further embodiment of the present inventions, this capability is automatically provided, depending on the security level indicated by the security level parameter. In an alternative embodiment, the number of recent file-versions to be preserved can be automatically set, since the meaning of this parameter appears to be obvious to the normal user. In a further embodiment of the present invention, an association of every available security level to different numbers of backup storage locations is performed once, e.g. at the start of the backup-program and the association is stored in a list. This has the advantage that a potentially computationally costly scan of the environment of the client hosting the backup-program and the computation of the backup-strategy only has to be performed once. The association can be reutilized later, by accessing the association between the security level parameter and the backup storage locations.

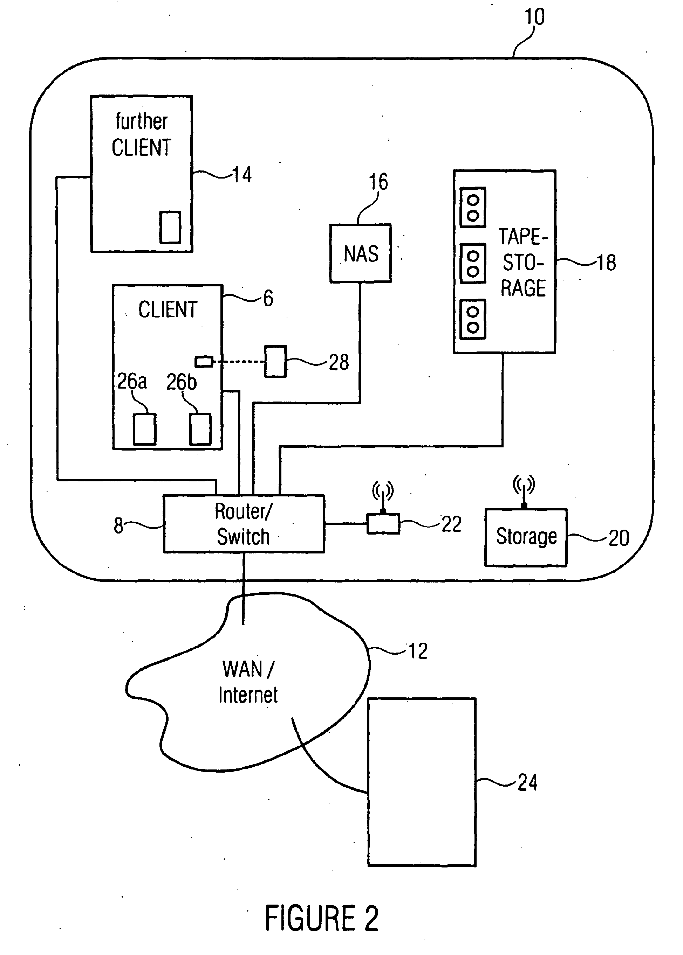

Fig. 2 shows an example of an environment, in which a client 6 hosting an embodiment of a backup-program implementing the inventive concept is situated. The client 6 is connected, via Ethernet, to a router or switch 8, which routes the traffic between a local area network 10 and a wide area network 12 (Internet). The local area network 10 comprises a further client 14, a network attached storage device 16, a tape-storage (tape silo) 18 and a wireless storage 20. The further client 14, the network attached storage (NAS) 16 and the tape-storage 18 are connected to the router/switch 8 by Ethernet. The wireless storage 20 is connected via a wireless access point (AP) 22 to the router/switch 8, which provides wireless access to the wired part of the LAN 10. Router/switch 8 switches traffic within the LAN 10 and routes traffic from the wide area network WAN 12 to the LAN 10. Fig. 2 furthermore shows an internet-storage-server 24, which is located somewhere in the wide area network 12.

According to the embodiments of the present invention, the client 6 implements the method for generating a backup strategy. This can, for example, be a piece of software only intended to generate a backup strategy or a backup-software, which generates the backup strategy and, at the same time, performs the backup. In the example of Fig. 2, the environment, which is automatically scanned, comprises all devices of the LAN 10, the WAN 12 and all devices or backup storage locations directly connected to the client 6 as the internal hard drives 26a and 26b and the external storage space 28, removably connected to the client 6. As already mentioned, any other backup storage location capable of storing content or data may be identified by the inventive method, while scanning the environment of the client 6. The embodiments of the present invention would identify the further client 14, the network attached source 16, the tape-storage 18, the wireless-storage 20, the internet-storage-server 24, the external storage device 28 and the internal hard disc 26a and 26b of client 6 as backup storage locations, which could be used.

Depending on the security level parameter, selected backup storage locations are chosen. In that sense, the security level parameter is associated to one or more backup storage locations according to a security association rule. If, for example, a high security level is demanded, the security association rule would select at least one backup storage location, which is physically separate from client 6. This could, for example, be tape-storage 18 in the LAN, provided the tape-storage 18 is located in a different room or even in a different building. To allow for such an appropriate choice, some embodiments of the present invention do additionally determine a distance estimation for each backup storage location, which indicates a physical distance between the client and each backup storage location. Such an estimation can, for example, be based on the number of hops a IP-packet or message requires until it reaches its receiver, that is the identified backup storage location. The higher the number of hops, the greater the probability that the backup storage location is far away from the client 6. A further possibility would be to derive the distance estimation based on the IP addresses of the identified backup storage locations, when the IP-protocol is used for communication. Different sub-networks could then, for example, indicate a remote backup storage location such as, for example, the internet-storage-server 24. Another possibility to derive the distance estimation could be to query the identified backup storage locations using some management-protocol as, for example, SNMP, to directly receive an answer indicating the location of the identified backup storage locations.

For very high security demands, the internet-storage-server 24 may be selected, which is physically separated by the complete LAN 10, such that even when the entire LAN-infrastructure breaks down (for example, by a fire in the respective company), a complete backup of data can be preserved. To this end, the security association rule additionally takes also into account cost-estimates when deciding upon the selected backup storage locations, in case the internet-storage-server 24 is commercially run, that is when storage space on the internet-storage-server 24 is not for free. Therefore, an additional rentability/security tradeoff is performed by a security association rule, when deciding on the selected backup storage location.

According to a further embodiment of the present invention, the client 6 hosting an embodiment of a backup-program is capable of identifying the further client 14 as hosting an embodiment of the backup-program as well. That is, the backup-programs are implemented to recognize each other using some proprietary protocol or some standard-protocol, when scanning the environment of the clients hosting the backup-programs. Such, when scanning the environment of the client, the other client's running backup-programs as well may offer storage space of their local hard discs to the client 6. Some embodiments of backup-programs additionally allow to synchronize content between the client 6 and the further client 14, utilizing the backup-program. That is, specific file types or folders can be simultaneously maintained up-to-date, i.e. the file versions stored on the client 6 and the further client 14 will at any time be the same. This allows a user to work within the same environment on client 6 as well as on client 14, at the same time providing a backup of the user's files, as these are simultaneously stored on both clients.

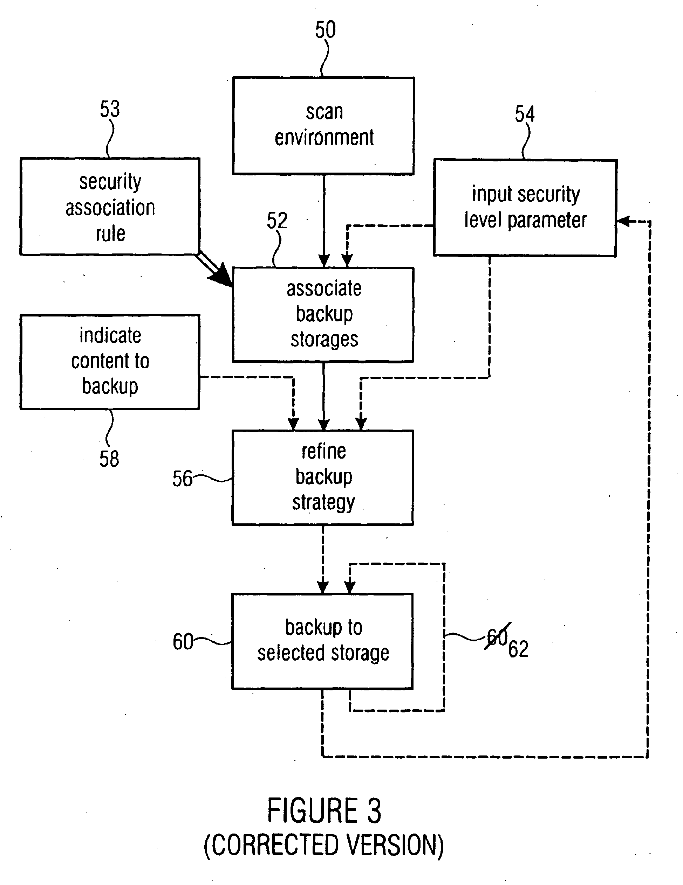

Fig. 3 shows an embodiment of an inventive computer-program, which is implementing the inventive method. The embodiment of the backup-program is illustrated by a block diagram detailing the functions provided by the backup-program. In a scanning step 50, the environment of a client hosting the backup-program is scanned to identify backup storage locations. In an association step 52, a security level parameter is associated with one or more backup storage locations, according to a security association rule 53. To this end, the security association rule 53 must be provided to perform the association step, as indicated in fig. 3. The security level parameter may optionally be input by a user in an input-step 54 prior to the association step 52, such that association could only be performed for the security level parameter input in the input-step 54. That is, an association is only performed for the one parameter selected by a user. Alternatively, the association can be performed for every possible user selectable security level parameter and the association can be stored, such that it can be reutilized easily.

In a strategy refinement step 56, the backup strategy may optionally be specified in more detail by a content-input 58. The content-input may be performed by the user or may be required by the backup-program, such that the content to be backed-up is also defined by an external input. This input can, for example define the file types to be backed-up or the folders, which are to be backed-up. Alternatively, the content to be backed-up can be automatically generated, e.g. based on the security level parameter.

As an alternative to the provision of the security level parameter prior to the association of the security level parameter with the backup storage locations, the security level parameter may be provided as an additional input to the backup generation 56, after the association has taken place. As described before, the association previously performed would be reused to generate the backup strategy 56.

Once the backup strategy has been derived, an optional backup-step 60 may be performed, copying or transferring the content to be backed-up to the selected storage locations. As indicated in Fig. 3, the backup-step may be repeated with a predetermined frequency in a backup-loop 62, wherein the frequency may be chosen depending on the security level parameter. Alternatively, the backup frequency may be directly selected by a user.

In an alternative embodiment, the user is regularly prompted to update its desired security level by providing a new security level parameter, such that the backup strategy may be modified to match the user's security demand at any time.

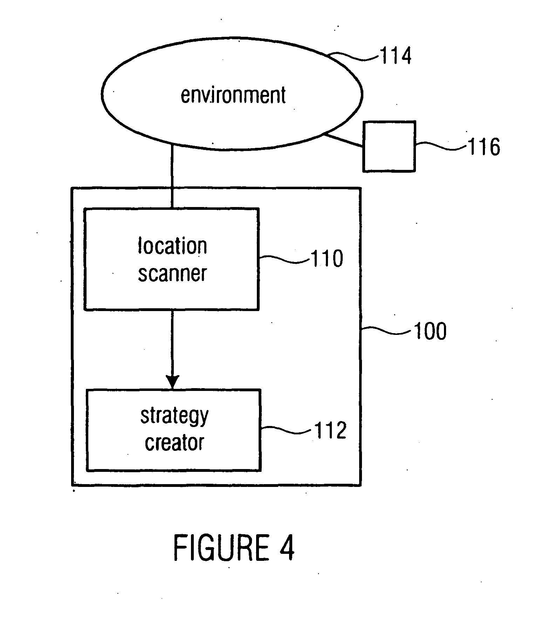

Fig. 4 shows an embodiment of an inventive apparatus for generating a backup strategy 100, which comprises a location scanner 110 and a backup strategy creator 112. The location scanner 110 is communicatively coupled to an environment 114 of a client housing the apparatus 100. In the sample-configuration of Fig. 4, the environment 114 comprises one backup storage location 116. The location scanner 110 is adapted to scan the environment 114 of the client to identify backup storage locations. The backup strategy creator is adapted to associate one or more backup storage locations with a security level parameter according to a security association rule indicating selected backup storage locations for a backup strategy with a security level indicated by the security level parameter.

Summarizing, while the configuration and possibilities of the user's PC systems and client-systems vary widely, e.g. in terms of the amount of data to be saved, the capability of access to different storage systems or the internet connectivity for utilizing on-line storage, the inventive approach for programmatically or automatically determining backup routeines, frequency of backups and backup storage locations, offers flexible and easy solutions for assuring the highest safety for the precious digital data, which a user has collected over years.

Without learning anything about backups or data security, the user has to answer only one question:
How safe do I want to have my backup? - Different security levels depending on the capabilities of the user's systems (PCs or other clients).

Optionally, a second question may be answered, regarding the file types:
What do I want to preserve? - General types of content like: documents, pictures, etc. as well as program settings, e-mails, games and the like.

Decisions on the backup scenarios, the type and frequency of backups, the best locations to store the backups, are taken automatically by the software following the inventive approach. Files and folders can be observed in regard to changes and backup actions can be taken.

In alternative embodiments, the user may still have the chance to adopt the proposed options for his individuals demands, if he wants to. However, there is no need to do that in case the user just wants to insure his digital data or life to be saved and does not want to worry about the details.

Some embodiments of the invention relate to backup-programs or backup-software, incorporating this approach and which are of very high usability only offering a slim GUI (graphical user interface), requiring only the most important settings, in particular, the setting of a desired security level parameter.

The backup-program would not bother the user with asking question after question, nor would it present a highly overloaded dialogue with numerous options and complicated configuration possibilities.

This provides the major advantage to the user that data security is provided to the user without having the user to think about how to accomplish a secure and reliable backup. To this end, the software scans the system for its configuration and possibilities to hold the backup data. It will identify possible storage devices - internal and external ones, it will check for network drives and FTP servers within the LAN (local area network) and also utilize WAN (wide area network) online storage if WAN or internet connectivity is available.

Dependant on the security level set by the user, the software calculates a backup scenario and decides on the settings for various backup procedures and the frequency of backup runs. Internally, the software is equipped with an extensive set of rules (security association rule), which are considered for the automatic (programmatic) decisions of the software or the backup-program. Thus, the aforementioned embodiments of the present invention present an opportunity for providing a new and innovative concept for backup strategy generation and software that enriches the user's life with high usability and ease-of-use, while preserving the digital data and the user's digitial life for the futures.

Although the inventive embodiments have previously been discussed mainly using conventional computer-networks or PCs, the inventive concept is by no means restricted to the application of conventional PCs or networks. The concept may be applied to any other client capable of storing data such as, for example, mobile phones, mobile video or music players, portable satellite navigation systems, navigation applications and entertainment systems of cars, boats or airplanes and the like. Wherever digital media or content is to be preserved, the application of the inventive concept will result in the benefits described in the previous paragraphs.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

While the foregoing has been particularly shown and described with reference to particular embodiments thereof, it will be understood by those skilled in the art that various other changes in the form and details may be made.

## Claims

1. Method for generating a backup strategy for a client, comprising:
automatically scanning (2; 50) an environment (114) of the client to identify backup storage locations;
associating a security level parameter with one or more backup storage locations (4; 52) according to a security association rule (53), the security association rule (53) indicating one or more selected backup storage locations among the identified backup storage locations for the backup strategy, the backup strategy having a security level indicated by the security level parameter.

2. Method in accordance with claim 1, further comprising:
receiving the security level parameter.

3. Method in accordance with claim 2, in which receiving comprises prompting a user for an input parameter indicating the security level parameter.

4. Method in accordance with claim 1, in which the automated scanning (2; 50) is performed on occurrence of a predetermined event.

5. Method in accordance with claim 4, in which the predetermined event is one of the following events:
switching on the client, starting a backup software, running a backup method implementing the method for generating a backup strategy, receiving the security level parameter, receiving an input parameter indicating the security level parameter from a user input or the end of a predetermined time interval.

6. Method in accordance with claim 2, in which only the received security level parameter is associated with one or more selected backup storage locations according to the security association rule (53).

7. Method in accordance with claim 2, in which an available number of user selectable security level parameters are associated with one or more backup storage locations according to the security association rule, wherein the backup storage locations for the backup strategy are chosen by selecting the backup storage locations associated to the received security level parameter.

8. Method in accordance with claim 1, further comprising:
receiving a cost parameter indicating a cost criterion for the backup, wherein the security association rule is such, that the selected backup storage locations fulfill the cost criterion.

9. Method in accordance with claim 8, in which the security association rule is such, that a total cost for the backup stays below a cost limit indicated by the cost criterion.

10. Method in accordance with claim 1, in which the scanning (2; 50) further comprises determining a distance estimation indicating a physical distance between the client and each backup storage location.

11. Method in accordance with claim 1, in which scanning (2; 50) comprises scanning of the client (6) and/or a network (10), in which the client is situated.

12. Method in accordance with claim 10, in which the association rule (53) is such that a security level parameter indicating a higher security is associated with a backup storage location having a distance estimation indicating a higher physical distance between the client the backup storage location.

13. Method in accordance with claim 10, in which at least one security level parameter is associated with a backup storage location, which is distant from the local area network of the client.

14. Method in accordance with claim 1, in which the security association rule is such, that a security level parameter indicating a higher security is associated with a greater number of backup storage locations.

15. Method in accordance with claim 1, in which the security association rule (53) is such that the security level parameter is associated with a frequency of backups of the backup strategy associated to the security level parameter.

16. Method in accordance with claim 15, in which the security association rule (53) is such that a security level indicating a higher security is associated with a higher frequency of backups.

17. Method in accordance with claim 1, in which the security association rule (53) is such that at least one security level parameter is associated to an instantaneous frequency mode, indicating an immediate backup of content when the content changes.

18. Method in accordance with claim 1, in which the security association rule (53) is such that the security level parameter is associated with an encryption strength indicating a level of security of an optional encryption of content to be backed up.

19. Method in accordance with claim 18, in which the security association rule (53) is such that a security level parameter indicating a higher security is associated with an encryption strength indicating a higher level of security of the encryption.

20. Method in accordance with claim 1, in which the security association rule (53) is such that the security level parameter is associated to different file types and/or storage locations of content to be backed up.

21. Method in accordance with claim 20, in which the security association rule (53) is such, that a security level parameter indicating a higher security is associated to a greater number of file types and/or storage locations.

22. Method in accordance with claim 1, in which the security association rule (53) is such, that the security level parameter is further associated to a history strategy, indicating a number of recent versions of content to be kept accessible.

23. Method in accordance with claim 22, in which the association rule (53) is such, that a security level parameter indicating a higher security is associated with a history strategy indicating a higher number of recent versions to be kept accessible.

24. Method in accordance with claim 1, in which scanning the environment (2; 50) comprises generating and/or storing a list of the backup storage locations.

25. Method in accordance with claim 1, in which associating the security level parameter (4; 52) comprises generating and/or storing a list of the selected backup storage locations associated to the security level parameter.

26. Method in accordance with claim 1, in which the association rule (53) is such, that a backup storage location having a higher intrinsic data security is associated to a security level parameter indicating a higher security.

27. Method for backing up user content from a client, the method comprising:
receiving a user input indicating a security level parameter for the backup;
generating a backup strategy in accordance with the method defined in claim 1;
storing the user content to the selected backup storage locations associated to the security level parameter.

28. Computer program for, when running on a computer, implementing a method for generating a backup strategy for a client, comprising: automatically scanning an environment of the client to identify backup storage locations; and associating a security level parameter with one or more backup storage locations according to a security association rule, the security association rule indicating one or more selected backup storage locations among the identified backup storage locations for the backup strategy, the backup strategy having a security level indicated by the security level parameter.

29. Computer program for, when running on a computer, implementing a method for backing up user content from a client, the method comprising:
receiving a user input parameter indicating a security level parameter for the backup;
generating a backup strategy in accordance with claim 28; and
storing the user content to the selected backup storage locations associated to the security level parameter.

30. Computer program in accordance with claim 29, additionally adapted to notify a user when a selected backup storage location becomes unavailable.

31. Computer program in accordance with claim 29, additionally adapted to notify a user, when content is stored.

32. Computer program in accordance with claim 29, adapted to notify a user using a pop-up-window, e-mail, a printout, an optical or an acoustical signal.

33. Computer program in accordance with claim 29, additionally adapted to identify a further client running the computer program in the environment of the client.

34. Computer program in accordance with claim 33, additionally adapted to synchronize content with the further client.

35. Apparatus for generating a backup strategy for a client (6), comprising:
a location scanner (110) adapted to scan an environment (114) of the client (6) to identify backup storage locations (116), and
a backup strategy creator (112) adapted to associate one or more backup storage locations (116) with a security level more backup storage locations (116) with a security level parameter according to a security association rule, the security association rule indicating selected backup storage locations (116) for a backup strategy with a security level indicated by the security level parameter.

36. Backup apparatus for backing up user content from a client, the method comprising:
a user input receiver for receiving a user input indicating a security level parameter for the backup;
an apparatus for generating a backup strategy in accordance with claim 35; and
a content-storer for storing the user content to the selected backup storage locations associated to the security level parameter.

## Patentansprüche

1. Verfahren zum Erzeugen einer Sicherungsstrategie für einen Klienten, das folgende Schritte aufweist:
automatisches Abtasten (2; 50) einer Umgebung (114) des Klienten, um Sicherungsspeicherungsorte zu identifizieren;
Zuordnen eines Sicherheitspegelparameters zu einem oder mehreren Sicherungsspeicherungsorten (4; 52) gemäß einer Sicherheitszuordnungsregel (53), wobei die Sicherheitszuordnungsregel (53) einen oder mehrere ausgewählte Sicherungsspeicherungsorte unter den identifizierten Sicherungsspeicherungsorten für die Sicherungsstrategie anzeigt, wobei die Sicherungsstrategie einen Sicherheitspegel aufweist, der durch den Sicherheitspegelparameter angezeigt wird.

2. Verfahren gemäß Anspruch 1, das ferner folgenden Schritt aufweist:
Empfangen des Sicherheitspegelparameters.

3. Verfahren gemäß Anspruch 2, bei dem das Empfangen das Auffordern eines Benutzers nach einem Eingabeparameter aufweist, der den Sicherheitspegelparameter anzeigt.

4. Verfahren gemäß Anspruch 1, bei dem das automatisierte Abtasten (2; 50) bei Auftreten eines vorbestimmten Ereignisses ausgeführt wird.

5. Verfahren gemäß Anspruch 4, bei dem das vorbestimmte Ereignis eines der folgenden Ereignisse ist:
Einschalten des Klienten, Starten einer Sicherungssoftware, Ausführen eines Sicherungsverfahrens, das das Verfahren zum Erzeugen einer Sicherungsstrategie implementiert, Empfangen des Sicherheitspegelparameters, Empfangen eines Eingabeparameters, der den Sicherheitspegelparameter anzeigt, von einer Benutzereingabe, oder das Ende eines vorbestimmten Zeitintervalls.

6. Verfahren gemäß Anspruch 2, bei dem nur der empfangene Sicherheitspegelparameter einem oder mehreren ausgewählten Sicherungsspeicherungsorten gemäß der Sicherheitszuordnungsregel (53) zugeordnet wird.

7. Verfahren gemäß Anspruch 2, bei dem eine verfügbare Anzahl von vom Benutzer auswählbaren Sicherheitspegelparametern einem oder mehreren Sicherungsspeicherungsorten gemäß der Sicherheitszuordnungsregel zugeordnet wird, wobei die Sicherungsspeicherungsorte für die Sicherungsstrategie gewählt werden durch Auswählen der Sicherungsspeicherungsorte, die dem empfangenen Sicherheitspegelparameter zugeordnet sind.

8. Verfahren gemäß Anspruch 1, das ferner folgenden Schritt aufweist:
Empfangen eines Kostenparameters, der ein Kostenkriterium für die Sicherung anzeigt, wobei die Sicherheitszuordnungsregel derart ist, dass die ausgewählten Sicherungsspeicherungsorte das Kostenkriterium erfüllen.

9. Verfahren gemäß Anspruch 8, bei dem die Sicherheitszuordnungsregel derart ist, dass Gesamtkosten für die Sicherung unter einer Kostengrenze bleiben, die durch das Kostenkriterium angezeigt wird.

10. Verfahren gemäß Anspruch 1, bei dem das Abtasten (2; 50) ferner das Bestimmen einer Distanzschätzung aufweist, die eine physische Distanz zwischen dem Klienten und jedem Sicherungsspeicherungsort bestimmt.

11. Verfahren gemäß Anspruch 1, bei dem das Abtasten (2; 50) das Abtasten des Klienten (6) und/oder eines Netzwerks (10) aufweist, in dem der Klient positioniert ist.

12. Verfahren gemäß Anspruch 10, bei dem die Zuordnungsregel (53) derart ist, dass ein Sicherheitspegelparameter, der eine höhere Sicherheit anzeigt, einem Sicherungsspeicherungsort mit einer Distanzschätzung zugeordnet ist, die eine höhere physische Distanz zwischen dem Klienten und dem Sicherungsspeicherungsort anzeigt.

13. Verfahren gemäß Anspruch 10, bei dem zumindest ein Sicherheitspegelparameter einem Sicherungsspeicherungsort zugeordnet wird, der entfernt von dem lokalen Netz des Klienten ist.

14. Verfahren gemäß Anspruch 1, bei dem die Sicherheitszuordnungsregel derart ist, dass ein Sicherheitspegelparameter, der eine höhere Sicherheit anzeigt, einer größeren Anzahl von Sicherungsspeicherungsorten zugeordnet ist.

15. Verfahren gemäß Anspruch 1, bei dem die Sicherheitszuordnungsregel (53) derart ist, dass der Sicherheitspegelparameter einer Häufigkeit von Sicherungen der Sicherungsstrategie zugeordnet wird, die dem Sicherheitspegelparameter zugeordnet ist.

16. Verfahren gemäß Anspruch 15, bei dem die Sicherheitszuordnungsregel (53) derart ist, dass ein Sicherheitspegel, der eine höhere Sicherheit anzeigt, einer höheren Häufigkeit von Sicherungen zugeordnet wird.

17. Verfahren gemäß Anspruch 1, bei dem die Sicherheitszuordnungsregel (53) derart ist, dass zumindest ein Sicherheitspegelparameter einem momentanen Häufigkeitsmodus zugeordnet wird, der eine sofortige Sicherung von Inhalt anzeigt, wenn sich der Inhalt ändert.

18. Verfahren gemäß Anspruch 1, bei dem die Sicherheitszuordnungsregel (53) derart ist, dass der Sicherheitspegelparameter einer Verschlüsselungsstärke zugeordnet ist, die einen Sicherheitspegel einer optionalen Verschlüsselung von Inhalt anzeigt, der gesichert werden soll.

19. Verfahren gemäß Anspruch 18, bei dem die Sicherheitszuordnungsregel (53) derart ist, dass ein Sicherheitspegelparameter, der eine höhere Sicherheit anzeigt, einer Verschlüsselungsstärke zugeordnet ist, die einen höheren Pegel einer Sicherheit der Verschlüsselung anzeigt.

20. Verfahren gemäß Anspruch 1, bei dem die Sicherheitszuordnungsregel (53) derart ist, dass der Sicherheitspegelparameter unterschiedlichen Dateitypen und/oder Speicherungsorten von Inhalt zugeordnet ist, der gesichert werden soll.

21. Verfahren gemäß Anspruch 20, bei dem die Sicherheitszuordnungsregel (53) derart ist, dass ein Sicherheitspegelparameter, der eine höhere Sicherheit anzeigt, einer größeren Anzahl von Dateitypen und/oder Speicherungsorten zugeordnet ist.

22. Verfahren gemäß Anspruch 1, bei dem die Sicherheitszuordnungsregel (53) derart ist, dass der Sicherheitspegelparameter ferner einer Geschichtsstrategie zugeordnet ist, die eine Anzahl von neuen Inhaltsversionen anzeigt, die zugreifbar gehalten werden sollen.

23. Verfahren gemäß Anspruch 22, bei dem die Zuordnungsregel (53) derart ist, dass ein Sicherheitspegelparameter, der eine höhere Sicherheit anzeigt, einer Geschichtsstrategie zugeordnet ist, die eine größere Anzahl von neuen Versionen anzeigt, die zugreifbar gehalten werden sollen.

24. Verfahren gemäß Anspruch 1, bei dem das Abtasten der Umgebung (2; 50) das Erzeugen und/oder Speichern einer Liste der Sicherungsspeicherungsorte aufweist.

25. Verfahren gemäß Anspruch 1, bei dem das Zuordnen des Sicherheitspegelparameters (4; 52) das Erzeugen und/oder Speichern einer Liste der ausgewählten Sicherungsspeicherungsorte aufweist, die dem Sicherheitspegelparameter zugeordnet sind.

26. Verfahren gemäß Anspruch 1, bei dem die Zuordnungsregel (53) derart ist, dass ein Sicherungsspeicherungsort mit einer höheren intrinsischen Datensicherheit einem Sicherheitspegelparameter zugeordnet ist, der eine höhere Sicherheit anzeigt.

27. Verfahren zum Sichern von Benutzerinhalt von einem Klienten, wobei das Verfahren folgende Schritte aufweist:
Empfangen einer Benutzereingabe, die einen Sicherheitspegelparameter für die Sicherung anzeigt;
Erzeugen einer Sicherungsstrategie gemäß dem Verfahren, das in Anspruch 1 definiert ist;
Speichern des Benutzerinhalts an den ausgewählten Sicherungsspeicherungsorten, die dem Sicherheitspegelparameter zugeordnet sind.

28. Computerprogramm zum Implementieren eines Verfahrens zum Erzeugen einer Sicherungsstrategie für einen Klienten, wenn es auf einem Computer läuft, das folgende Merkmale aufweist:
automatisches Abtasten einer Umgebung des Klienten, um Sicherungsspeicherungsorte zu identifizieren; und Zuordnen eines Sicherheitspegelparameters zu einem oder mehreren Sicherungsspeicherungsorten gemäß einer Sicherheitszuordnungsregel, wobei die Sicherheitszuordnungsregel einen oder mehrere ausgewählte Sicherungsspeicherungsorte unter den identifizierten Sicherungsspeicherungsorten für die Sicherungsstrategie anzeigt, wobei die Sicherungsstrategie einen Sicherheitspegel aufweist, der durch den Sicherheitspegelparameter angezeigt wird.

29. Computerprogramm zum Implementieren eines Verfahrens zum Sichern von Benutzerinhalt von einem Klienten, wenn es auf einem Computer läuft, wobei das Verfahren folgende Schritte aufweist:
Empfangen eines Benutzereingabeparameters, der einen Sicherheitspegelparameter für die Sicherung anzeigt;
Erzeugen einer Sicherungsstrategie gemäß Anspruch 28;
Speichern des Benutzerinhalts an den ausgewählten Sicherungsspeicherungsorten, die dem Sicherheitspegelparameter zugeordnet sind.

30. Computerprogramm gemäß Anspruch 29, das zusätzlich angepasst ist, um einen Benutzer zu benachrichtigen, wenn ein ausgewählter Sicherungsspeicherungsort unverfügbar wird.

31. Computerprogramm gemäß Anspruch 29, das zusätzlich angepasst ist, um einen Benutzer zu benachrichtigen, wenn Inhalt gespeichert wird.

32. Computerprogramm gemäß Anspruch 29, das angepasst ist, um einen Benutzer unter Verwendung eines Dialogfensters, E-Mails, Ausdrucks, eines optischen oder eines akustischen Signals zu benachrichtigen.

33. Computerprogramm gemäß Anspruch 29, das zusätzlich angepasst ist, um einen weiteren Klienten zu identifizieren, der das Computerprogramm in der Umgebung des Klienten betreibt.

34. Computerprogramm gemäß Anspruch 33, das zusätzlich angepasst ist, um Inhalt mit dem weiteren Klienten zu synchronisieren.

35. Vorrichtung zum Erzeugen einer Sicherungsstrategie für einen Klienten (6), die folgende Merkmale aufweist:
eine Ortsabtasteinrichtung (110), die angepasst ist, um eine Umgebung (114) des Klienten (6) abzutasten, um Sicherungsspeicherungsorte (116) zu identifizieren; und
einen Sicherungsstrategieerzeuger (112), der angepasst ist, um einen oder mehrere Sicherungsspeicherungsorte (116) einem Sicherheitspegelparameter gemäß einer Sicherheitszuordnungsregel zuzuordnen, wobei die Sicherheitszuordnungsregel ausgewählte Sicherungsspeicherungsorte (116) für eine Sicherungsstrategie mit einem Sicherheitspegel anzeigt, der durch den Sicherheitspegelparameter angezeigt wird.

36. Sicherungsvorrichtung zum Sichern von Benutzerinhalt von einem Klienten, wobei das Verfahren folgende Schritte aufweist:
einen Benutzereingabeempfänger zum Empfangen einer Benutzereingabe, die einen Sicherheitspegelparameter für die Sicherung anzeigt;
eine Vorrichtung zum Erzeugen einer Sicherungsstrategie gemäß Anspruch 35; und
eine Inhaltsspeicherungseinrichtung zum Speichern des Benutzerinhalts an die ausgewählten Sicherungsspeicherungsorte, die dem Sicherheitspegelparameter zugeordnet sind.

## Revendications

1. Procédé pour générer une stratégie de sauvegarde pour un client, comprenant:
balayer automatiquement (2; 50) un environnement (114) du client, pour identifier des emplacements de mémoire de sauvegarde;
associer un paramètre de niveau de sécurité à un ou plusieurs emplacements de mémoire de sauvegarde (4; 52) selon une règle d'association de sécurité (53), la règle d'association de sécurité (53) indiquant un ou plusieurs emplacements de mémoire de sauvegarde sélectionnés parmi les emplacements de mémoire de sauvegarde identifiés pour la stratégie de sauvegarde, la stratégie de sauvegarde présentant un niveau de sécurité indiqué par le paramètre de niveau de sécurité.

2. Procédé selon la revendication 1, comprenant par ailleurs:
recevoir le paramètre de niveau de sécurité.

3. Procédé selon la revendication 2, dans lequel la réception comprend le fait de demander à un utilisateur un paramètre d'entrée indiquant le paramètre de niveau de sécurité.

4. Procédé selon la revendication 1, dans lequel le balayage automatisé (2; 50) est effectué à l'occurrence d'un événement prédéterminé.

5. Procédé selon la revendication 4, dans lequel l'événement prédéterminé est l'un parmi les événements suivants: enclencher un client, commencer un logiciel de sauvegarde, exécuter un procédé de sauvegarde en mettant en oeuvre le procédé pour générer une stratégie de sauvegarde, recevoir le paramètre de niveau de sécurité, recevoir un paramètre d'entrée indiquant le paramètre de niveau de sécurité d'une entrée d'utilisateur ou la fin d'un intervalle de temps prédéterminé.

6. Procédé selon la revendication 2, dans lequel seul le paramètre de niveau de sécurité reçu est associé à un ou plusieurs emplacements de mémoire de sauvegarde sélectionnés selon la règle d'association de sécurité (53).

7. Procédé selon la revendication 2, dans lequel un nombre disponible de paramètres de niveau de sécurité sélectionnables par l'utilisateur sont associés à un ou plusieurs emplacements de mémoire de sauvegarde selon la règle d'association de sécurité, où les emplacements de mémoire de sauvegarde pour la stratégie de sauvegarde sont choisis en sélectionnant les emplacements de mémoire de sauvegarde associés au paramètre de niveau de sécurité reçu.

8. Procédé selon la revendication 1, comprenant par ailleurs:
recevoir un paramètre de coût indiquant un critère de coût pour la sauvegarde, dans lequel la règle d'association de sécurité est telle que les emplacements de mémoire de sauvegarde sélectionnés remplissent le critère de coût.

9. Procédé selon la revendication 8, dans lequel la règle d'association de sécurité est telle qu'un coût total de la sauvegarde reste au-dessous d'une limite de coût indiquée par le critère de coût.

10. Procédé selon la revendication 1, dans lequel le balayage (2; 50) comprend par ailleurs le fait de déterminer une estimation de distance indiquant une distance physique entre le client et chaque emplacement de mémoire de sauvegarde.

11. Procédé selon la revendication 1, dans lequel le balayage (2; 50) comprend le fait de balayer le client (6) et/ou un réseau (10) dans lequel est situé le client.

12. Procédé selon la revendication 10, dans lequel la règle d'association (53) est telle qu'un paramètre de niveau de sécurité indiquant une sécurité supérieure est associé à un emplacement de mémoire de sauvegarde présentant une estimation de distance indiquant une distance physique supérieure entre le client et l'emplacement de mémoire de sauvegarde.

13. Procédé selon la revendication 10, dans lequel au moins un paramètre de niveau de sécurité est associé à un emplacement de mémoire de sauvegarde qui est éloigné du réseau local du client.

14. Procédé selon la revendication 1, dans lequel la règle d'association de sécurité est telle qu'un paramètre de niveau de sécurité indiquant une sécurité supérieure est associé à un nombre supérieur d'emplacements de mémoire de sauvegarde.

15. Procédé selon la revendication 1, dans lequel la règle d'association de sécurité (53) est telle que le paramètre de niveau de sécurité est associé à une fréquence de sauvegardes de la stratégie de sauvegarde associée au paramètre de niveau de sécurité.

16. Procédé selon la revendication 15, dans lequel la règle d'association de sécurité (53) est telle qu'un niveau de sécurité indiquant une sécurité supérieure est associé à une fréquence supérieure de sauvegardes.

17. Procédé selon la revendication 1, dans lequel la règle d'association de sécurité (53) est telle qu'au moins un paramètre de niveau de sécurité est associé à un mode de fréquence instantanée indiquant une sauvegarde immédiate du contenu lorsque le contenu change.

18. Procédé selon la revendication 1, dans lequel la règle d'association de sécurité (53) est telle que le paramètre de niveau de sécurité est associé à une intensité de cryptage indiquant un niveau de sécurité d'un cryptage optionnel du contenu à sauvegarder.

19. Procédé selon la revendication 18, dans lequel la règle d'association de sécurité (53) est telle qu'un paramètre de niveau de sécurité indiquant une sécurité supérieure est associé à une intensité de cryptage indiquant un niveau de sécurité supérieur du cryptage.

20. Procédé selon la revendication 1, dans lequel la règle d'association de sécurité (53) est telle que le paramètre de niveau de sécurité est associé à différents types de fichiers et/ou emplacements de mémoire de contenu à sauvegarder.

21. Procédé selon la revendication 20, dans lequel la règle d'association de sécurité (53) est telle qu'un paramètre de niveau de sécurité indiquant une sécurité supérieure est associé à un nombre supérieur de types de fichier et/ou d'emplacements de mémoire.

22. Procédé selon la revendication 1, dans lequel la règle d'association de sécurité (53) est telle que le paramètre de niveau de sécurité est par ailleurs associé à une stratégie d'historique indiquant un certain nombre de versions récentes du contenu à maintenir accessibles.

23. Procédé selon la revendication 22, dans lequel la règle d'association (53) est telle qu'un paramètre de niveau de sécurité indiquant une sécurité supérieure est associé à une stratégie d'historique indiquant un nombre supérieur de versions récentes à maintenir accessibles.

24. Procédé selon la revendication 1, dans lequel le balayage de l'environnement (2; 50) comprend le fait de générer et/ou de mémoriser une liste des emplacements de mémoire de sauvegarde.

25. Procédé selon la revendication 1, dans lequel l'association du paramètre de niveau de sécurité (4; 52) comprend le fait de générer et/ou de mémoriser une liste des emplacements de mémoire de sauvegarde sélectionnés associés au paramètre de niveau de sécurité.

26. Procédé selon la revendication 1, dans lequel la règle d'association (53) est telle qu'un emplacement de mémoire de sauvegarde présentant une sécurité de données intrinsèque supérieure est associé à un paramètre de niveau de sécurité indiquant une sécurité supérieure.

27. Procédé pour sauvegarder le contenu d'utilisateur d'un client, le procédé comprenant:
recevoir une entrée d'utilisateur indiquant un paramètre de niveau de sécurité pour la sauvegarde;
générer une stratégie de sauvegarde selon le procédé défini dans la revendication 1;
mémoriser le contenu d'utilisateur aux emplacements de mémoire de sauvegarde sélectionnés associés au paramètre de niveau de sécurité.

28. Programme d'ordinateur pour la mise en oeuvre, lorsqu'il est exécuté sur un ordinateur, d'un procédé pour générer une stratégie de sauvegarde pour un client, comprenant: balayer automatiquement un environnement du client, pour identifier des emplacements de mémoire de sauvegarde; et associer un paramètre de niveau de sécurité à un ou plusieurs emplacements de mémoire de sauvegarde selon une règle d'association de sécurité, la règle d'association de sécurité indiquant un ou plusieurs emplacements de mémoire de sauvegarde sélectionnés parmi les emplacements de mémoire de sauvegarde identifiés pour la stratégie de sauvegarde, la stratégie de sauvegarde présentant un niveau de sécurité indiqué par le paramètre de niveau de sécurité.

29. Programme d'ordinateur pour la mise en oeuvre, lorsqu'il est exécuté sur un ordinateur, d'un procédé pour sauvegarder le contenu d'utilisateur d'un client, le procédé comprenant:
recevoir un paramètre d'entrée d'utilisateur indiquant un paramètre de niveau de sécurité pour la sauvegarde;
générer une stratégie de sauvegarde selon la revendication 28; et
mémoriser le contenu d'utilisateur aux emplacements de mémoire de sauvegarde sélectionnés associés au paramètre de niveau de sécurité.

30. Programme d'ordinateur selon la revendication 29, adapté en outre pour notifier un utilisateur lorsqu'un emplacement de mémoire de sauvegarde sélectionné devient non disponible.

31. Programme d'ordinateur selon la revendication 29, adapté en outre pour notifier un utilisateur lorsque le contenu est mémorisé.

32. Programme d'ordinateur selon la revendication 29, adapté pour notifier un utilisateur à l'aide d'une fenêtre à affichage rapide, d'un courrier électronique, d'un document imprimé, d'un signal optique ou acoustique.

33. Programme d'ordinateur selon la revendication 29, adapté en outre pour identifier un autre client exécutant le programme d'ordinateur dans l'environnement du client.

34. Programme d'ordinateur selon la revendication 33, adapté en outre pour synchroniser le contenu avec l'autre client.

35. Appareil pour générer une stratégie de sauvegarde pour un client (6), comprenant:
un balayeur d'emplacements (110) adapté pour balayer un environnement (114) du client (6), pour identifier les emplacements de mémoire de sauvegarde (116); et
un créateur de stratégie de sauvegarde (112) adapté pour associer un ou plusieurs emplacements de mémoire de sauvegarde (116) à un paramètre de niveau de sécurité selon une règle d'association de sécurité, la règle d'association de sécurité indiquant les emplacements de mémoire de sauvegarde sélectionnés (116) pour une stratégie de sauvegarde avec un niveau de sécurité indiqué par le paramètre de niveau de sécurité.

36. Appareil de sauvegarde pour sauvegarder le contenu d'utilisateur d'un client, le procédé comprenant:
un récepteur d'entrée d'utilisateur pour recevoir une entrée d'utilisateur indiquant un paramètre de niveau de sécurité pour la sauvegarde;
un appareil pour générer une stratégie de sauvegarde selon la revendication 35; et
un moyen de mémorisation de contenu pour mémoriser le contenu d'utilisateur aux emplacements de mémoire de sauvegarde sélectionnés associés au paramètre de niveau de sécurité.
